# EUROPEAN PATENT SPECIFICATION

(11) **EP 4 599 319 B1**
(45) Date of publication and mention of the grant of the patent: **08.04.2026**
(21) Application number: 23786732.0
(22) Date of filing: 29.09.2023
(51) Int. Cl.: G06F 3/042, G06F 3/041

(54) **DISPLAY SYSTEMS USING MULTILAYER OPTICAL FILMS**
ANZEIGESYSTEME MIT MEHRSCHICHTIGEN OPTISCHEN FILMEN
SYSTÈMES D'AFFICHAGE UTILISANT DES FILMS OPTIQUES MULTICOUCHES

(30) Priority: 04.10.2022 US 202263412974 P
(43) Date of publication of application: 13.08.2025
(73) Proprietor: 3M Innovative Properties Company, Saint Paul, Minnesota 55133-3427 (US)
(72) Inventor: ACHARYA, Bharat R., Saint Paul, Minnesota 55133-3427 (US); BENOIT, Gilles Jean-Baptiste, Saint Paul, Minnesota 55133-3427 (US); HAGERMOSER, Edward S., Saint Paul, Minnesota 55133-3427 (US)
(74) Representative: Vossius & Partner Patentanwälte Rechtsanwälte mbB
(86) International application number: PCT/IB2023/059791
(87) International publication number: WO 2024/074960

(56) References cited:
- US-A1- 2011 043 490
- US-A1- 2016 217 751

## Description

### Field of the Invention

Provided are electronic display systems, and particularly electronic display systems with touch functionality.

### Background

To provide touch functionality in large area displays, different touch technologies have been utilized in the art. Among these, one technology uses an array of infrared light sources (e.g., light emitting diodes, or LEDs) and infrared light detectors, or sensors, mounted around the edge of the touch screen placed over the display panel so that the light is injected into it using total internal reflection. In some cases, an array of detectors may be positioned on the opposite side of the touch screen to receive the signal from the infrared light sources. When an object (e.g., finger or stylus) touches the screen, the intensity of infrared light at the detectors is reduced and the location of the object may be determined using a triangulation algorithm based on the relative distribution of infrared intensity at individual photodiodes.

While this principle can work well for relatively small screens, it can become exponentially expensive with larger display panels due to the high cost associated with obtaining high quality (e.g., display uniformity, optical quality, flatness, etc.) needed for signal propagation across large area using total internal reflection. Also, the efficient in-coupling and out-coupling of infrared light to the touch panel while maintaining a thin profile, eliminating interference from ambient light, and preventing surface contamination pose additional challenges.

US 2016/217751 A1 discloses an apparatus including a display panel, configured to be backlit by infrared light and visible light, including electronic circuitry configured to control transmission of visible light; and a plurality of discrete infrared light apertures configured to facilitate projection of a pattern of infrared light through the front face of the display panel for detecting an object in front of but not touching the front face of the display panel.

US 2011/043490 A1 discloses an integrated vision and display system comprising a display-image forming layer configured to transmit a display image for viewing through a display surface; an imaging detector configured to image infrared light of a narrow range of angles relative to the display surface normal and including a reflection from one or more objects on or near the display surface; a vision-system emitter configured to emit the infrared light for illuminating the objects; a visible- and infrared-transmissive light guide having opposing upper and/or lower face, configured to receive the infrared light from the vision-system emitter, to conduct the infrared light via TIR from the upper and lower faces, and to project the infrared light onto the objects outside of the narrow range of angles relative to the display surface normal.

### Summary

A technical need remains for display systems that provide reliable and high-resolution touch detection, while being both cost-effective and scalable to large-sized display systems. The provided display systems exploit an angular dependence in the light transmission through multilayer optical films to enable a novel touch screen device architecture. Under LCD touch sensing is envisioned by using films that transmit a specific sensing wavelength within a specified angular range. Optionally, these display systems can use a resonant cavity with a narrow pass band whereby the film is transparent to sensing wavelengths at a specific wavelength within a narrow angular cone and reflective for other wavelengths and outside the angular cone, it is reflective. A plurality of near infrared (NIR) sensors can be disposed under the display to obtain display systems with multi-touch capability.

In a first aspect, a liquid crystal display (LCD) system is provided. The display system comprises the following layers, in the order provided: a display layer; an emissive layer comprising a plurality of visible light emitters configured to emit visible light having a wavelength of from 425 nm to 680 nm; and a plurality of infrared light emitters configured to emit infrared light having a wavelength of from 800 nm to 1500 nm, wherein the display layer transmits both the visible light and the infrared light at substantially all angles of incidence; a multilayer optical film that transmits the visible light at substantially all angles of incidence but transmits the infrared light only along angles of incidence beyond a first threshold angle, the first threshold angle being from 20 degrees to 40 degrees; and a detecting layer comprising a plurality of detectors sensitive to the infrared light.

In a second aspect, a method of locating a position of an object when placed in proximity of an LCD system is provided, the method comprising: providing the display system; emitting the infrared light from the plurality of infrared light emitters; reflecting the infrared light from the object at locations where the display system is touched; using the plurality of detectors, detecting the presence of the reflected infrared light transmitted through the multilayer optical film; and performing edge detection on the infrared light transmitted to determine an area along which the display system was touched.

The invention is set out in the appended set of claims.

### Brief Description of the Drawings

FIG. 1 is an exploded, side cross-sectional view of a display system according to one exemplary embodiment.
FIG. 2 is a transmission spectrum of a multilayer optical film incorporated into the display system of FIG. 1.
FIG. 3 is an intensity profile characterizing the infrared light transmitted through the multilayer optical film shown in FIGS. 1 and 2.
FIG. 4 is an exploded, side cross-sectional view of a display system according to another exemplary embodiment.
FIG. 5 is a transmission spectrum of a multilayer optical film incorporated into the display system of FIG. 4.
FIG. 6 is an intensity profile characterizing the infrared light transmitted through the multilayer optical film shown in FIGS. 4 and 5.
FIG. 7 is a side cross-sectional view showing the plurality of layers in an exemplary multilayer optical film useful in the provided display systems.
FIGS. 8 and 9 are transmission spectra for exemplary multilayer optical film components useful in the display systems of FIGS. 1 and 4.

Repeated use of reference characters in the specification and drawings is intended to represent the same or analogous features or elements of the disclosure. It should be understood that numerous other modifications and embodiments can be devised by those skilled in the art, which fall within the scope of the principles of the disclosure. The figures may not be drawn to scale.

### DEFINITIONS

As used herein:
"Between," when referring to a range, means having a value falling between two endpoints but not including the endpoints.

"Substantially" means at least 50%, at least 55%, at least 60%, at least 65%, at least 70%, at least 75%, at least 80%, at least 85%, at least 90%, at least 95%, or 100%.

"Substantially all" means at least 90%, at least 95%, at least 97%, at least 98%, at least 99%, or 100%.

### Detailed Description

As used herein, the terms "preferred" and "preferably" refer to embodiments described herein that can afford certain benefits, under certain circumstances. However, other embodiments may also be preferred, under the same or other circumstances. Furthermore, the recitation of one or more preferred embodiments does not imply that other embodiments are not useful and is not intended to exclude other embodiments from the scope of the invention.

As used herein, the singular forms "a," "an," and "the" include plural referents unless the context clearly dictates otherwise. Thus, for example, reference to "a" or "the" component may include one or more of the components and equivalents thereof known to those skilled in the art. Further, the term "and/or" means one or all of the listed elements or a combination of any two or more of the listed elements. It is noted that the term "comprises", and variations thereof do not have a limiting meaning where these terms appear in the accompanying description. Moreover, "a," "an," "the," "at least one," and "one or more" are used interchangeably herein. Relative terms such as left, right, forward, rearward, top, bottom, side, upper, lower, horizontal, vertical, and the like may be used herein and, if so, are from the perspective observed in the particular drawing. These terms are used only to simplify the description, however, and not to limit the scope of the invention in any way.

Reference throughout this specification to "one embodiment," "certain embodiments," "one or more embodiments" or "an embodiment" means that a particular feature, structure, material, or characteristic described relating to the embodiment is included in at least one embodiment of the invention. Thus, the appearances of the phrases such as "in one or more embodiments," "in certain embodiments," "in one embodiment" or "in an embodiment" in various places throughout this specification are not necessarily referring to the same embodiment of the invention.

According to some aspects of the present disclosure, a display system is provided that allows the transmission of infrared light (e.g., near infrared light) throughout the entire LCD enables the use of infrared LEDs and sensors directly behind and beneath the display panel. In other aspects, the display system utilizes an optical film technology that is reflective to visible light at all angles of incidence while being transparent to NIR only at certain angles of incidence. This system thus provides an opportunity to use both visible and infrared light sources behind displays to enable a touch detection functionality.

The constituent layers of the provided display systems, as referred to herein, can have opposing major surfaces that are generally parallel to each other. In some instances, these layers are continuous layers and co-extensive along their respective major surfaces.

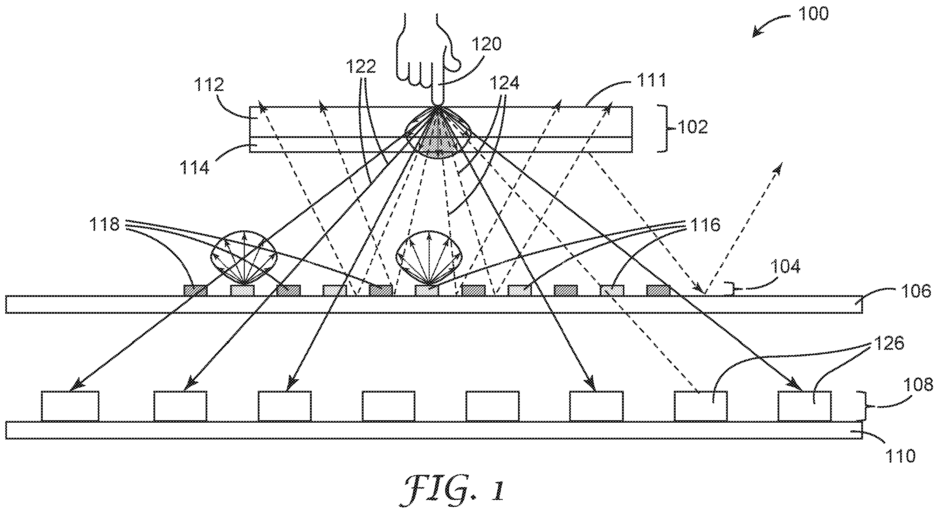

A display system according to one exemplary embodiment is shown in FIG. 1 and hereinafter referred to by the numeral 100. As depicted, the display system 100 has a multilayer construction, generally comprised of the following layers, in the order provided: a display layer 102, emitter layer 104, multilayer optical film 106, detecting layer 108, and optional printed circuit board 110.

The display layer 102 is aligned with a top major surface 111 of the display system 100. The top major surface 111 is an exposed, touch-sensitive surface and capable of detecting physical contact by a finger, stylus, or other pointing device. The display layer 102 need not be particularly restricted, and can include a liquid crystal panel 112, optionally extending across an underlying reflective polarizer 114, which is disposed between the liquid crystal panel and the emissive layer. Light must be present for the liquid crystal display (LCD) to be readable, and ambient light passing through the front of the glass (e.g., office light or sun light) can reflect from the reflective polarizer 114 to provide further illumination for the display system 100 (particularly for reflective LCD devices).

In a broader sense, the reflective polarizer 114 can transmit the polarization of light that is parallel to the transmission axis of an absorbing polarizer in the LCD and reflect the orthogonal polarization that gets scrambled after reflection from the layers below it. As a result, most of the light impinging on the bottom absorbing polarizer of the LCD has its polarization state parallel to the transmission axis of the absorbing polarizer. In the absence of the reflective polarizer, 50% of the light would be absorbed by the absorbing polarizer.

In some embodiments, the reflective polarizer 114 may be configured such that, for a substantially normally incident light, the reflective polarizer 114 has an average optical reflectance of greater than about 50%, or 55%, or 60%, or 70%, or 75%, or 80%, or 85%, or 90% for visible light that is polarized along an in-plane first direction (e.g., polarized along an x-axis of the reflective polarizer) and an average optical transmittance of greater than about 50%, or 55%, or 60%, or 65%, or 70%, or 75% when the incident light is polarized along an in-plane orthogonal second direction (e.g., the y-axis of the reflective polarizer). In some embodiments, the reflective polarizer 114 may also be configured such that, for the substantially normally incident light, the reflective polarizer 114 has an optical transmission of greater than about 30%, or 35%, or 40%, or 45%, or 50%, or 55%, or 60%, or 65%, or 70%, or 75%, or 80% for infrared light in at least one of the first or second polarization states above.

As a further optional layer, display layer 102 can include an optical diffuser layer. The optical diffuser layer can be disposed between the reflective polarizer 114 and emitter layer 106, and can uniformly distribute the light coming from the visible LEDs, while also scrambling the polarization state of the light reflected by the reflective polarizer.

Without ambient light, backlighting from the light source is necessary because the liquid crystal panel, by its nature, does not generate light on its own. A color filter is typically used to provide colored light based on the additive combination of primary colors red, green, and blue. The LCD panel includes a multiplicity of pixels, each subdivided into subpixels aligned with the primary colors, where each subpixel only transmits light of their respective primary color and absorbs all other colors. The coordinated presentation of pixels can thus generate the desired image.

The display layer 102 transmits both the visible light and the infrared light at substantially all angles of incidence. Transmission of LCD backlighting, generally provided by the emissive layer 104, enables a viewer to see images generated by the display system 100, preferably with minimal or no degradation in brightness. Moreover, transmission of infrared light, such as provided by emitters 118, is generally necessary for the display system 100 to detect touches based on infrared light reflections at the major surface 111.

The presence of an object, generally a finger or stylus, pressed against the top major surface 111 of the display system 100 can be detected by reflection of infrared light from this object. As shown in FIG. 1, a finger 120 brought into close vicinity of, or in contact with, the top major surface 111 can interact with the propagating light at the point of touch. In this interaction, part of the light may be scattered by the finger, part of the light may be absorbed by the finger, and part of the light may continue to propagate in its original direction. The signal from the reflection of sensing infrared radiation can be used for edge detection, in which the boundaries of areas in contact with the object can be delineated based on electronic signals provided by the display system 100 to a computer.

Extending beneath the display layer 102 is the emissive layer 104. The emissive layer 104 serves two functions-first, it provides a visible light source (i.e., backlighting) for the generated image, and second, it provides an infrared light source used for touch detection. To serve this dual function, the emissive layer includes a plurality of visible light emitters 116 configured to emit visible light, along with a plurality of infrared light emitters 118 configured to emit infrared light. The visible light generally has a wavelength in the range of from 425 nm to 680 nm-for example less than, equal to, or greater than 425 nm, 430, 435, 440, 445, 450, 460, 470, 480, 490, 500, 510, 520, 530, 540, 550, 560, 570, 580, 590, 600, 610, 620, 630, 640, 650, 655, 660, 665, 670, 675, or 680 nm.

The infrared light generally has a wavelength in the range of from 850 nm to 1500 nm-for example less than, equal to, or greater than 850 nm, 855, 860, 865, 870, 875, 880, 885, 890, 895, 900, 910, 920, 930, 940, 950, 960, 970, 980, 990, 1000, 1050, 1100, 1150, 1200, 1250, 1300, 1350, 1400, 1450, or 1500 nm. Useful infrared light emitters 118 can be based on a light emitting diode, laser, vertical-cavity surface-emitting laser, or combination thereof. Optionally, infrared light emitters can emit semi-Lambertian radiation. Emitting semi-Lambertian radiation can illuminate an object such that light reflected from the object is also semi-Lambertian and directed toward a plurality of detectors used to identify its location.

The visible light emitters 116 and infrared light emitters 118 are generally arranged in respective two-dimensional arrays, in which the emitters 116, 118 are evenly distributed across the major surface of the display system 100. The two-dimensional arrays can be based on, for example, a rectangular grid pattern that is replicated across the major surface of the emissive layer 104. To minimize the thickness of the emissive layer 104, the visible light emitters 116 and infrared light emitters 118 can be coplanar with each other. If desired, the visible light emitters 116 and infrared light emitters 118 could also be provided in two or more discrete layers such that they are not coplanar.

Referring again to FIG. 1, the emitters 116, 118 are disposed on the multilayer optical film 106. In the depicted embodiment, the emitters 116, 118 is mounted directly to the multilayer optical film 106. As an alternative, the emitters 116, 118 can be disposed on a common support layer located between the emissive layer 104 and the multilayer optical film 106. This support layer is preferably transparent to both the visible light and the infrared light from the emitters 116, 118, respectively. Useful support layers can be made from glass, polyethylene terephthalate, or a combination thereof. The emitters 116, 118 can directly contact the support layer or have at least one interposing layer, such as an adhesive, socket, or connector. The support layer can have a transmittance of greater than 50 percent, 55, 60, 65, 70, 75, 80, 85, 90, or 95 percent of the visible and/or infrared light.

As a further option, it can be possible for the visible light emitters 116 and infrared light emitters 118 to be separated from each other by a gap, where the gap is at least partially filled with an infrared-absorbing material. Useful infrared absorbing materials can include NIR absorbing dyes and pigments (for example, those sold under the trade designation OPTLION from Toyo Visual Solutions Co., Ltd., Tokyo, Japan, or LUNIR5 from Luminochem Kft, Budapest, Hungary). Advantageously, such a construction can help to minimize undesirable reflections and enhance the resolution of touch detection at the major surface 111.

The multilayer optical film 106 can be made from any suitable multilayer optical film known in the art. Suitable multilayer optical films provide desirable transmission and/or reflection properties through an arrangement of constituent layers that have different refractive indices. It has been known to make such multilayer optical films by depositing a sequence of inorganic materials in optically thin layers (or "microlayers") on a substrate in a vacuum chamber. Inorganic multilayer optical films are described, for example, in textbooks by H. A. Macleod, Thin-Film Optical Filters, 2nd Ed., Macmillan Publishing Co. (1986) and by A. Thelan, Design of Optical Interference Filters, McGraw-Hill, Inc. (1989).

Multilayer optical films have also been demonstrated by coextrusion of alternating polymer layers comprised of first and second polymers having different refractive indices-see, e.g., U.S. Patent No. 3,610,729 (Rogers), U.S. Patent No. 4,446,305 (Rogers et al.), U.S. Patent No. 4,540,623 (Im et al.), U.S. Patent No. 5,448,404 (Schrenk et al.), and U.S. Patent No. 5,882,774 (Jonza et al.). In these polymeric multilayer optical films, polymer materials are used predominantly or exclusively in the makeup of the individual layers. These may be referred to as thermoplastic multilayer optical films. Such films are compatible with high volume manufacturing processes and can be made in large sheets and roll goods.

Like the display layer 102, the multilayer optical film 106 reflects visible light at substantially all angles of incidence. Unlike the display layer 102, the multilayer optical film 106 transmits infrared light only along angles of incidence at and beyond a certain threshold angle *θ_{c}.* This threshold angle *θ_{c}* can be from 20 degrees to 40 degrees, from 20 degrees to 30 degrees, from 25 degrees to 30 degrees, or in some embodiments, less than, equal to, or greater than 20 degrees, 25, 30, 35, or 40 degrees. Notably, however, this threshold angle *θ_{c}* can be dependent on the wavelength of the infrared light.

FIG. 1 further illustrates the property of selective light transmission described above for given wavelength of infrared light. At the point of contact where the finger 120 touches the major surface 111, infrared light emitted from the emitters 118 reflects from the finger 120 and is redirected back into the display system 100 over a wide range of angles as shown. Reflected light rays 122 (represented by solid lines) have an angles of incidence at and greater than the threshold angle *θ_{c}* and cleanly pass through the multilayer optical film 106. By contrast, reflected light rays 124 (represented by dotted lines) have angles of incidence less than the threshold angle *θ_{c}* and thus reflect off of the multilayer optical film 106 instead of passing through it.

The light rays that pass through the multilayer optical film 106 can be detected by a plurality of detectors 126 that comprise the detector layer 108. To facilitate electronic communication with the computer, the detectors 126 can be disposed on a printed circuit board 110, as shown. Like the emitters 116, 118 the detectors 126 are a multiplicity of tiny devices spread across the major surface of the display system 100. These detectors 126 are independently photosensitive to infrared light and can be in communication with a computer to report any localized exposure of the detector layer 108 to infrared light. Useful detectors can include, for example, solid-state photon detectors, including inorganic silicon photodiodes, thin-film transistors, organic photodiodes, or combinations thereof.

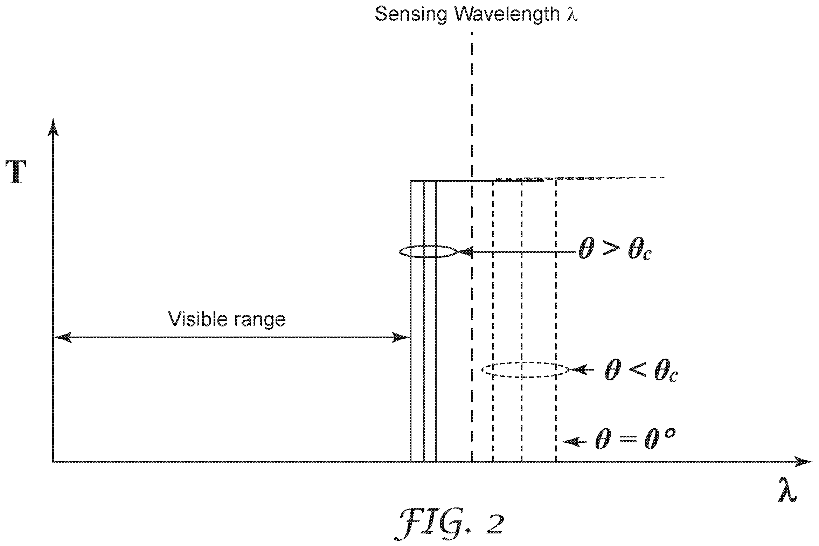

FIG. 2 is a schematic showing the transmittivity of the multilayer optical film 106, this time as a function of wavelength. This figure shows multiple response curves corresponding to different angles of incidence *θ*. For light in the visible wavelength spectrum, generally corresponding to the range from 425 nm to 680 nm, approximately 100% of light is reflected, irrespective of angle of incidence *θ*. For light at significantly higher wavelengths, as shown, the ability of the light to transmit through the multilayer optical film 106 depends on the angle of incidence *θ*. For monochromatic light at the sensing wavelength defined in FIG. 2, transmittivity goes to zero when the angle of incidence *θ* is less than the threshold value *θ_{c}*, while transmittivity is approximately 100% when the angle of incidence *θ* is above the threshold value *θ_{c}.* This sensing wavelength can be, for example, the wavelength of light emitted by the emitters 118 and detectable by detectors 126. Where the angle of incidence *θ* is fixed, there is generally a threshold wavelength *λ_{c}*, below which transmittivity is approximately zero and above which transmittivity is approximately 100%.

In a preferred embodiment, the multilayer optical film 106 substantially reflects the infrared light over all angles of incidence over which it does not transmit the infrared light. That is, for a given sensing wavelength, there could be minimal or zero absorption of light. In such instances, light that is incident on the multilayer optical film 106 is either reflected or transmitted. Such a scenario is generally beneficial to avoid generating excess heat within the layers of the display system 100, which is generally undesirable. In alternative applications where there are no such concerns, the multilayer optical film 106 could substantially absorb infrared light over all angles of incidence over which it does not transmit the infrared light.

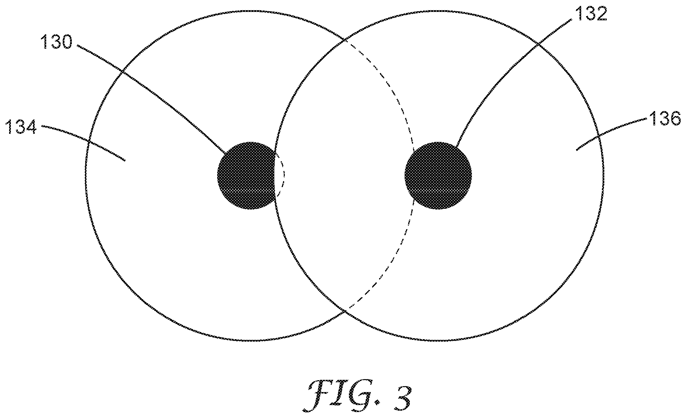

FIG. 3 shows a two-dimensional intensity map for detected infrared light corresponding to the display system 100 being touched at two locations simultaneously. The dark regions 130, 132 are concentric with the locations of the touches, and are attributable to the total reflection of infrared light from the multilayer optical film angles of incidence below *θ_{c}.* Bright regions 134, 136 encircle the dark regions 130, 132 and are comparatively much brighter, representing infrared light that is transmitted over angles of incidence exceeding the threshold angle of incidence *θ_{c}.* Using a film that transmits light only in a small range of angles, allows interference can be significantly reduced as most of the ambient light will be rejected before reaching the detectors.

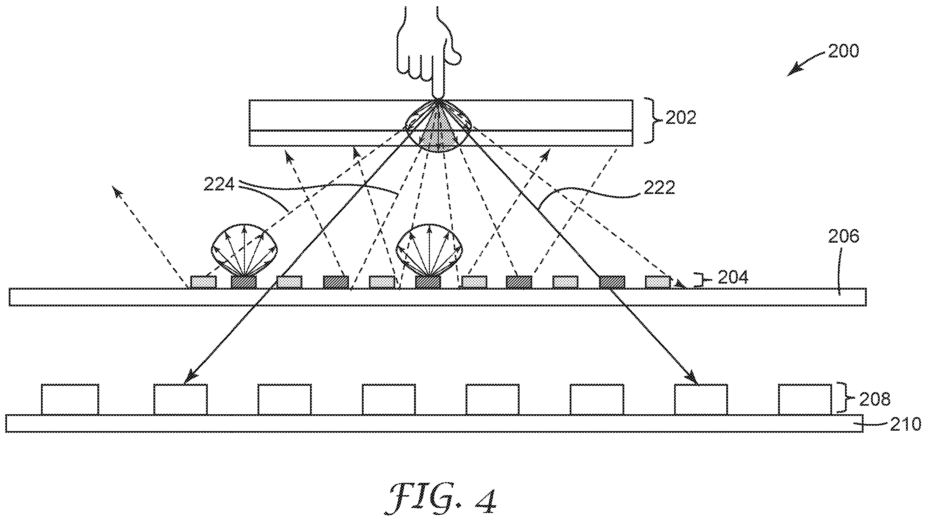

FIG. 4 shows a display system 200 having further enhancement relative to that provided in FIG. 1. The display system 200 has various features that are generally analogous to those in the prior embodiment, including a display layer 202, emitter layer 204, multilayer optical film 206, detecting layer 208, and optional printed circuit board 210. Functional aspects of the display layer 202, emitter layer 204, detecting layer 208, and printed circuit board 210 are similar to those already described and shall not be repeated here.

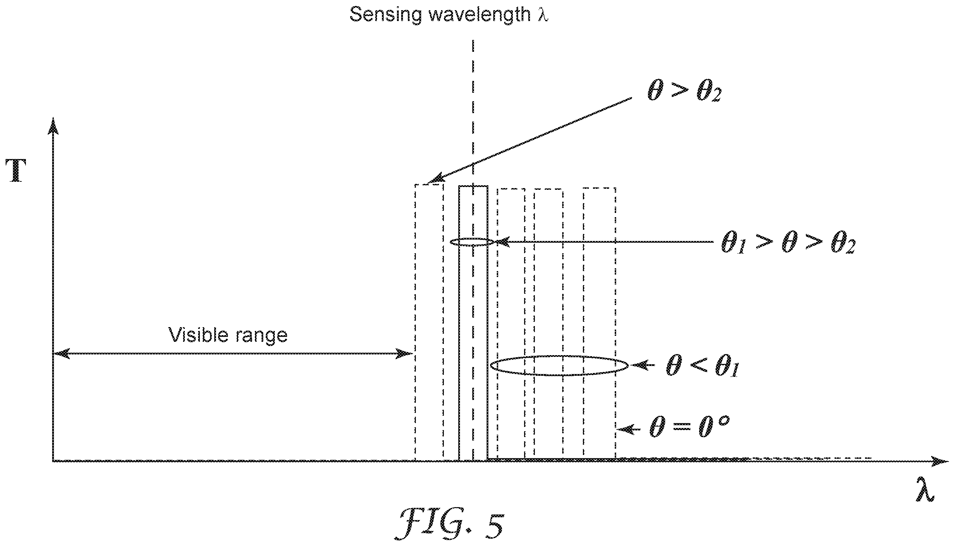

The multilayer optical film 206, however, bears both similarities and differences in its spectral response to infrared light at a certain sensing wavelength as shown in FIGS. 4 and 5. Infrared light reflected from the touch surface and impinging on the multilayer optical film 206 at relatively sharp angles (near 0 degrees) fully reflect as before. Such behavior is maintained for angles of incidence up to, but not including, a first threshold angle *θ₁.* Then, at angles of incidence from this first threshold angle *θ₁* to a second threshold angle *θ₂,* the infrared light fully transmits through the multilayer optical film 206. Finally, beyond the second threshold angle *θ₂,* the infrared light once again fully reflects from the multilayer optical film 206.

This is shown in by the transmitted light rays 222 (in solid lines) and reflected light rays 224 (in dotted lines) in FIG. 4, where infrared light transmission is only occurs over a narrow annular band surrounding the location of the touch. As shown here, the infrared light is reflected at other angles. Light that can be transmitted though oil or water needs to satisfy some conditions to be transmitted though the display. By tailoring the angles *θ₁, θ₂,* we can design the system so that when the oil and water is present on the display it does not reflect light back to the detectors.

Both the first threshold angle *θ₁* and second threshold angle *θ₂* can be independently engineered based on the architecture of the multilayer optical film 206. For instance, the first threshold angle *θ₁* can be from 20 degrees to 40 degrees, from 20 degrees to 30 degrees, from 25 degrees to 30 degrees, or in some embodiments, less than, equal to, or greater than 20 degrees, 25, 30, 35, or 40 degrees. The second threshold angle *θ₂* can be from 25 degrees to 35 degrees, from 28 degrees to 35 degrees, from 30 degrees to 35 degrees, or in some embodiments, less than, equal to, or greater than 25 degrees, 28, 30, 32, or 35 degrees.

The first and second threshold angles *θ₁* and *θ₂* can have an angular difference of from 5 degrees to 15 degrees, from 5 degrees to 10 degrees, from 5 degrees to 8 degrees, or in some embodiments, less than, equal to, or greater than 5 degrees, 6, 7, 8, 9, 10, 11, 12, 13, 14, or 15 degrees. As illustrated in FIG. 5, when light transmission is measured with respect to its wavelength, the multilayer optical film 206 displays a very narrow pass band that shifts with angle of incidence. By detecting touches by sensing infrared light transmitted through the multilayer optical film 206 along a narrow envelope between concentric cones, it is possible to significantly mitigate interference from ambient light and obtain a higher quality signal.

The benefit of a narrow pass band is realized because ambient NIR light can impinge on the display surface at all angles of incidence. With a single threshold angle *θ_{c}*, the multilayer optical film transmits all angles greater than that threshold angle *θ_{c}.* All ambient light at an angle of incidence greater than this angle will be transmitted, interfering the signal to be detected by the detector. If we have a film that transmits light only in a small range of angles, then the interference can be significantly reduced as most of the ambient light will be rejected before reaching the detectors by the optical film.

The threshold angles *θ₁* and *θ₂* above can be tailored to help reduce or eliminate sensitivity to water and oils that might be present on the touch surface. Light that can be transmitted though oil or water needs to satisfy some conditions to be transmitted though the display. By tailoring the angles *θ₁* and *θ₂,* it is possible to provide a system in which oil and water is present on the display does not reflect light back toward the detectors.

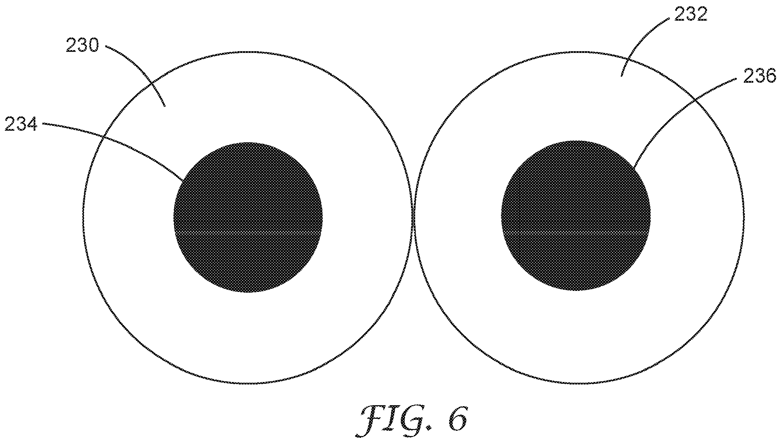

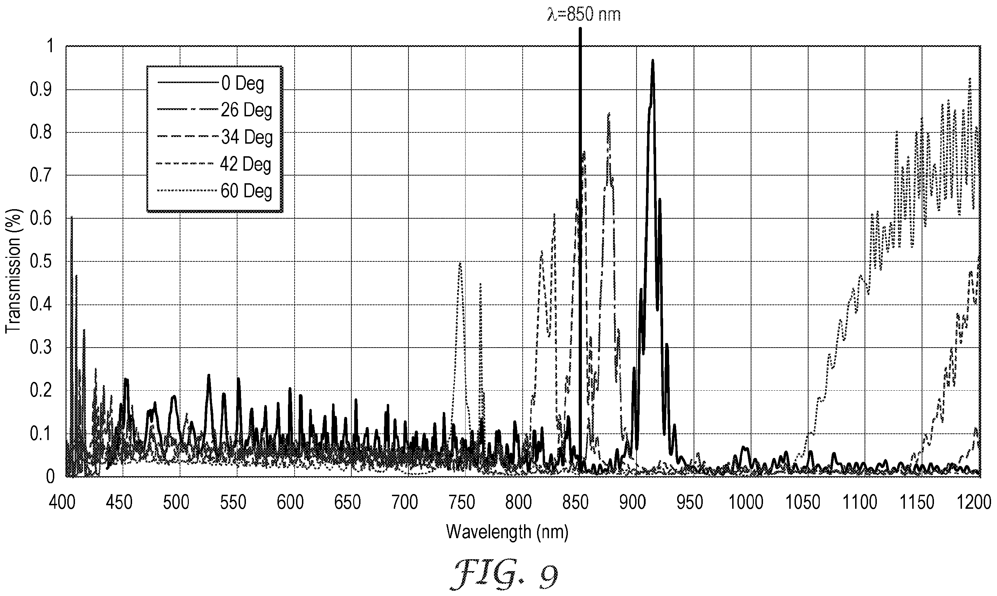

This behavior of the multilayer optical film 206 can be achieved using multilayer optical films that have a resonant cavity, whose spectral properties are illustrated in FIG. 9. When light rays having different wavelengths enter between two partially reflecting interfaces, such as provided by multilayer optical films, where only light having wavelengths over a narrow range are transmitted. The transmitted wavelengths can depend on, for example, the spacing between those opposing interfaces. When this spacing satisfies a resonance condition for this sensing light, the light can transmit through the multilayer optical film. Particular aspects associated with optical films having a resonant cavity are shown and described in International Publication No. WO 2022/137060 (Wheatley et al.), for example in FIG. 6C and the related passage on page 13, lines 21-33.

FIG. 6 shows a two-dimensional intensity map for detected infrared light corresponding to the display system 200 being touched at the same locations as shown for the display system 100 in FIG. 3. Like before, there are dark regions 234, 236 centered about the touch location, with annular bright regions 230, 232 encircling the dark regions 234, 236. Advantageously, in this case, the bright regions 230, 232 do not overlap as a result of the narrow pass band, avoiding convolution of the discrete touch-induced signals and enabling an improved resolution in touch detection. Higher resolutions, in turn, allow the display system 200 to differentiate between touching objects that are spaced closer to each other than previously possible.

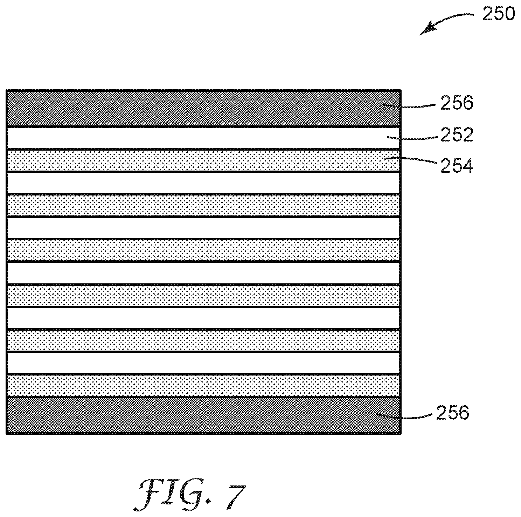

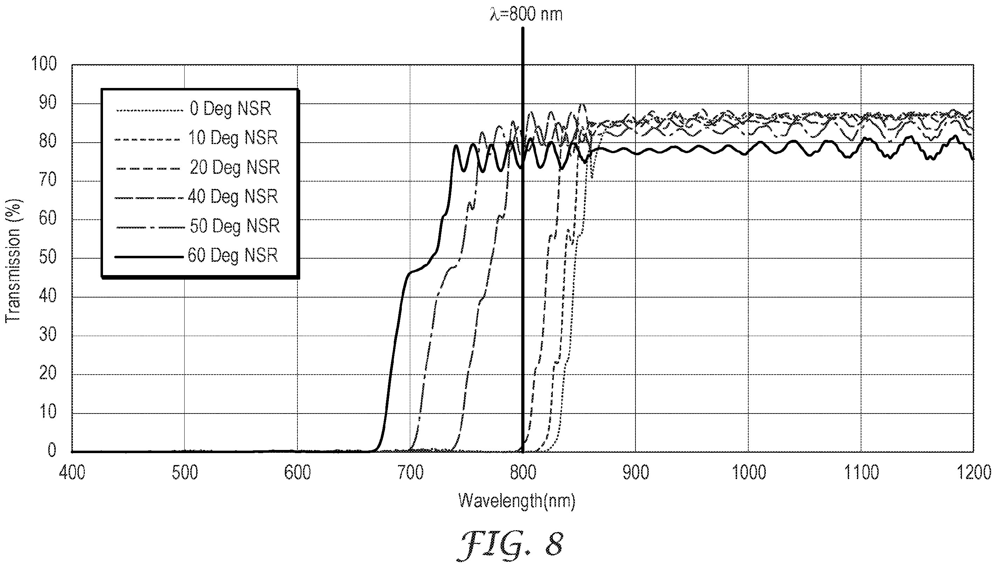

FIG. 7 provides an illustration of an embodiment of a layered architecture 250 which may be exhibited by any of the multilayer optical films discussed herein, including the reflective polarizer 114 of FIG. 1 and multilayer optical film 106, 206 of FIGS. 1 and 4, as previously discussed. In some embodiments, any of these films may be a multilayer optical film having a plurality of alternating polymeric layers 252 and 254 numbering at least 10, or at least 50, or at least 100, or at least 150, or at least 200, or at least 250, or at least 300 in total. In some embodiments, each of the polymeric layers 252 and 254 may have an average thickness of less than 500 nm, or less than 450 nm, or less than 400 nm, or less than 350 nm, or less than 300 nm, or less than 250 nm, or less than 200 nm. In some embodiments, the multilayer optical films may further include one or more outer skin layers 256. By configuring the indices of refraction of alternating layers 252 and 254, a multilayer film may be configured to match any of the optical transmission plots provided herein, such as the plots of FIGS. 8 and 9 herein, the polymeric layers 252, 254 may include one or more of a polycarbonate (PC), a polymethyl methacrylate (PMMA), a polyethylene terephthalate (PET), CoPMMA with PET, a glycol-modified polyethylene terephthalate (PETG), a polyethylene naphthalate (PEN), PC:PETG alloy, and a PEN/ PET copolymer. Further aspects are describes in U.S. Patent Publication No. WO 2020/053832 (Fabick et al.).

The transmission spectra of the optical films described herein were computed using a 4x4 transfer matrix multilayer optical response calculation engine. All computations were conducted using MATLAB software from Mathworks Inc., Natick, MA. Accuracy of the models were tested against measured data.

FIG. 8 shows the transmission spectra of a near infrared specular reflector (NSR) based on an exemplary multilayer optical film. For this reflector, a sensing wavelength of 800 nm was selected, such that the NSR reflects substantially all wavelengths of light at angles of incidence of up to approximately 40 degrees and reflects visible light at all angles of incidence. FIG. 9 shows the transmission spectra of a modified multilayer optical film with a resonant cavity. In this case, a sensing wavelength of 850 nm was selected, such that light is only transmitted over a very narrow angular range centered at approximately 34 degrees, and reflected at all other wavelengths, including that of all visible light. In both cases above, improved resolution and precision can be obtained using a multilayer optical film with a sharp right band edge, thereby creating a sharp cutoff angle.

In various embodiments, the provided display systems can provide a method of locating a position of an object when placed in proximity of a display system. Such a method can include emitting the infrared light from the plurality of infrared light emitters and then reflecting the infrared light from an internal surface of the display layer, wherein reflection occurs at locations where the display system is touched. The plurality of detectors can be used to detect infrared light reflected from the touch surface and subsequently transmitted through the multilayer optical film. A computer in communication with the detectors can then perform edge detection on the infrared light transmitted to determine an area along which the display system was touched.

In the event of inconsistencies or contradictions between portions of the incorporated references and this application, the information in the preceding description shall control. The preceding description, given in order to enable one of ordinary skill in the art to practice the disclosure, is not to be construed as limiting the scope of the disclosure, which is defined by the claims.

## Claims

1. An LCD system (100) comprising the following layers, in the order provided:
a display layer (102);
an emissive layer (104) comprising
a plurality of visible light emitters configured to emit visible light having a wavelength of from 425 nm to 680 nm; and
a plurality of infrared light emitters configured to emit infrared light having a wavelength of from 800 nm to 1500 nm,
wherein the display layer transmits both the visible light and the infrared light at substantially all angles of incidence;
a multilayer optical film (106) that transmits the visible light at substantially all angles of incidence but transmits the infrared light only along angles of incidence beyond a first threshold angle, the first threshold angle being from 20 degrees to 40 degrees; and
a detecting layer (108) comprising a plurality of detectors sensitive to the infrared light.

2. The LCD system of claim 1, wherein the multilayer optical film comprises at least 10 alternating polymeric layers of a first polymer and second polymer, the first and second polymers having different refractive indices.

3. The LCD system of claim 1 or 2, wherein the multilayer optical film comprises a resonant cavity disposed between opposing mirror layers.

4. The LCD system of any one of claims 1-3, wherein the multilayer optical film transmits the infrared light only along angles of incidence from the first threshold angle to a second threshold angle, the second threshold angle being from 25 degrees to 35 degrees.

5. The LCD system of any one of claims 1-4, wherein the first and second threshold angles have an angular difference of from 5 degrees to 15 degrees.

6. The LCD system of any one of claims 1-5, wherein the multilayer optical film substantially reflects the infrared light over all angles of incidence over which it does not transmit the infrared light.

7. The LCD system of any one of claims 1-5, wherein the multilayer optical film substantially absorbs the infrared light over all angles of incidence over which it does not transmit the infrared light.

8. The LCD system of any one of claims 1-7, further comprising a support layer between the emissive layer and the multilayer optical film, the support layer being transparent to both the visible light and the infrared light.

9. The LCD system of claim 8, wherein the visible light emitters and infrared light emitters of the emissive layer are disposed on, and directly contact, the support layer.

10. The LCD system of any one of claims 1-9, wherein the visible light emitters and infrared light emitters are separated from each other by a gap, and further wherein the gap is at least partially filled with an infrared-absorbing material.

11. The LCD system of any one of claims 1-10, further comprising a printed circuit board, wherein the detecting layer is disposed on the printed circuit board.

12. The LCD system of claim 11, wherein the display layer comprises
a liquid crystal panel, and
a reflective polarizer that transmits the infrared light, the reflective polarizer being disposed between the liquid crystal panel and the emissive layer.

13. The LCD system of any one of claims 1-12, wherein the visible light emitters, infrared light emitters, and detectors extend across the display layer in respective replicated two-dimensional arrays.

14. The LCD system of any one of claims 1-13, wherein the infrared light emitters emit semi-Lambertian radiation.

15. A method of locating a position of an object when placed in proximity of a display system, the method comprising:
providing the LCD system of any one of claims 1-14;
emitting the infrared light from the plurality of infrared light emitters;
reflecting the infrared light from an internal surface of the display layer at locations where the LCD system is touched;
using the plurality of detectors, detecting the presence of the reflected infrared light transmitted through the multilayer optical film; and
performing edge detection on the infrared light transmitted to determine an area along which the LCD system was touched.

## Patentansprüche

1. Ein LCD-System (100), aufweisend die folgenden Schichten in der bereitgestellten Reihenfolge:
eine Anzeigeschicht (102);
eine emittierende Schicht (104), aufweisend
eine Mehrzahl von Emittern von sichtbarem Licht, die konfiguriert sind, um sichtbares Licht, das eine Wellenlänge von 425 nm bis 680 nm hat, zu emittieren; und
eine Mehrzahl von Infrarotlichtemittern, die konfiguriert sind, um Infrarotlicht, das eine Wellenlänge von 800 nm bis 1500 nm hat, zu emittieren,
wobei die Anzeigeschicht sowohl das sichtbare Licht als auch das Infrarotlicht bei im Wesentlichen allen Einfallswinkeln durchlässt;
eine mehrschichtige optische Folie (106), die das sichtbare Licht bei im Wesentlichen allen Einfallswinkeln durchlässt, aber das Infrarotlicht nur entlang Einfallswinkeln jenseits eines ersten Schwellenwinkels durchlässt, wobei der erste Schwellenwinkel von 20 Grad bis 40 Grad beträgt; und
eine Detektionsschicht (108), aufweisend eine Mehrzahl von Detektoren, die auf das Infrarotlicht reagieren.

2. Das LCD-System nach Anspruch 1, wobei die mehrschichtige optische Folie mindestens 10 alternierende Polymerschichten aus einem ersten Polymer und einem zweiten Polymer aufweist, wobei das erste und das zweite Polymer unterschiedliche Brechungsindizes haben.

3. Das LCD-System nach Anspruch 1 oder 2, wobei die mehrschichtige optische Folie einen Resonanzhohlraum aufweist, der zwischen gegenüberliegenden Spiegelschichten angeordnet ist.

4. Das LCD-System nach einem der Ansprüche 1 bis 3, wobei die mehrschichtige optische Folie das Infrarotlicht nur entlang Einfallswinkeln von dem ersten Schwellenwinkel zu einem zweiten Schwellenwinkel durchlässt, wobei der zweite Schwellenwinkel von 25 Grad bis 35 Grad beträgt.

5. Das LCD-System nach einem der Ansprüche 1 bis 4, wobei der erste und der zweite Schwellenwinkel eine Winkeldifferenz von 5 Grad bis 15 Grad haben.

6. Das LCD-System nach einem der Ansprüche 1 bis 5, wobei die mehrschichtige optische Folie das Infrarotlicht im Wesentlichen über alle Einfallswinkel reflektiert, über die sie das Infrarotlicht nicht durchlässt.

7. Das LCD-System nach einem der Ansprüche 1 bis 5, wobei die mehrschichtige optische Folie das Infrarotlicht im Wesentlichen über alle Einfallswinkel absorbiert, über die sie das Infrarotlicht nicht durchlässt.

8. Das LCD-System nach einem der Ansprüche 1 bis 7, ferner aufweisend eine Trägerschicht zwischen der emittierenden Schicht und der mehrschichtigen optischen Folie, wobei die Trägerschicht sowohl für sowohl das sichtbare Licht als auch für das Infrarotlicht transparent ist.

9. Das LCD-System nach Anspruch 8, wobei die Emitter von sichtbarem Licht und Infrarotlichtemitter der emittierenden Schicht auf der Trägerschicht angeordnet sind und diese direkt berühren.

10. Das LCD-System nach einem der Ansprüche 1 bis 9, wobei die Emitter von sichtbarem Licht und die Infrarotlichtemitter durch einen Spalt voneinander getrennt sind, und ferner wobei der Spalt mindestens teilweise mit einem infrarotabsorbierenden Material gefüllt ist.

11. Das LCD-System nach einem der Ansprüche 1 bis 10, ferner aufweisend eine Leiterplatte, wobei die Detektionsschicht auf der Leiterplatte angeordnet ist.

12. Das LCD-System nach Anspruch 11, wobei die Anzeigeschicht aufweist
ein Flüssigkristallpanel, und
einen reflektierenden Polarisator, der das Infrarotlicht durchlässt, wobei der reflektierende Polarisator zwischen dem Flüssigkristallpanel und der emittierenden Schicht angeordnet ist.

13. Das LCD-System nach einem der Ansprüche 1 bis 12, wobei sich die Emitter von sichtbarem Licht, Infrarotlichtemitter und Detektoren über die Anzeigeschicht in jeweiligen replizierten zweidimensionalen Arrays erstrecken.

14. Das LCD-System nach einem der Ansprüche 1 bis 13, wobei die Infrarotlichtemitter semi-Lambertsche Strahlung emittieren.

15. Ein Verfahren zum Lokalisieren einer Position eines Objekts, wenn es in einer Nähe eines Anzeigesystems platziert wird, das Verfahren aufweisend:
Bereitstellen des LCD-Systems nach einem der Ansprüche 1 bis 14;
Emittieren des Infrarotlichts von der Mehrzahl von Infrarotlichtemittern;
Reflektieren des Infrarotlichts von einer inneren Oberfläche der Anzeigeschicht an Stellen, an denen das LCD-System berührt wird;
unter Verwendung der Mehrzahl von Detektoren, Detektieren des Vorhandenseins des reflektierten Infrarotlichts, das durch die mehrschichtige optische Folie durchgelassen wird; und
Durchführen einer Kantendetektion an dem durchgelassenen Infrarotlicht, um einen Bereich zu bestimmen, entlang dem das LCD-System berührt wurde.

## Revendications

1. Système LCD (100) comprenant les couches suivantes, dans l'ordre indiqué ci-dessous :
une couche d'affichage (102) ;
une couche émissive (104) comprenant
une pluralité d'émetteurs de lumière visible configurés pour émettre de la lumière visible ayant une longueur d'onde allant de 425 nm à 680 nm ; et
une pluralité d'émetteurs de lumière infrarouge configurés pour émettre de la lumière infrarouge ayant une longueur d'onde allant de 800 nm à 1500 nm,
dans lequel la couche d'affichage transmet à la fois la lumière visible et la lumière infrarouge à sensiblement tous les angles d'incidence ;
un film optique multicouche (106) qui transmet la lumière visible sensiblement à tous les angles d'incidence, mais transmet la lumière infrarouge uniquement le long d'angles d'incidence au-delà d'un premier angle seuil, le premier angle seuil allant de 20 degrés à 40 degrés ; et
une couche de détection (108) comprenant une pluralité de détecteurs sensibles à la lumière infrarouge.

2. Système LCD selon la revendication 1, dans lequel le film optique multicouche comprend au moins 10 couches polymères alternées d'un premier polymère et d'un second polymère, les premier et second polymères ayant des indices de réfraction différents.

3. Système LCD selon la revendication 1 ou 2, dans lequel le film optique multicouche comprend une cavité résonante disposée entre des couches miroirs opposées.

4. Système LCD selon l'une quelconque des revendications 1 à 3, dans lequel le film optique multicouche transmet la lumière infrarouge uniquement le long d'angles d'incidence allant du premier angle seuil à un second angle seuil, le second angle seuil allant de 25 degrés à 35 degrés.

5. Système LCD selon l'une quelconque des revendications 1 à 4, dans lequel les premier et second angles de seuil ont une différence angulaire allant de 5 degrés à 15 degrés.

6. Système LCD selon l'une quelconque des revendications 1 à 5, dans lequel le film optique multicouche réfléchit sensiblement la lumière infrarouge sur tous les angles d'incidence sur lesquels il ne transmet pas la lumière infrarouge.

7. Système LCD selon l'une quelconque des revendications 1 à 5, dans lequel le film optique multicouche absorbe sensiblement la lumière infrarouge sur tous les angles d'incidence sur lesquels il ne transmet pas la lumière infrarouge.

8. Système LCD selon l'une quelconque des revendications 1 à 7, comprenant en outre une couche de support entre la couche émissive et le film optique multicouche, la couche de support étant transparente à la fois à la lumière visible et à la lumière infrarouge.

9. Système LCD selon la revendication 8, dans lequel les émetteurs de lumière visible et les émetteurs de lumière infrarouge de la couche émissive sont disposés sur la couche de support et entrent directement en contact avec elle.

10. Système LCD selon l'une quelconque des revendications 1 à 9, dans lequel les émetteurs de lumière visible et les émetteurs de lumière infrarouge sont séparés les uns des autres par un écartement, et en outre dans lequel l'écartement est au moins partiellement rempli avec un matériau absorbant les infrarouges.

11. Système LCD selon l'une quelconque des revendications 1 à 10 comprenant en outre une carte de circuit imprimé, dans lequel la couche de détection est disposée sur la carte de circuit imprimé.

12. Système LCD selon la revendication 11, dans lequel la couche d'affichage comprend
un panneau à cristaux liquides, et
un polariseur réflecteur qui transmet la lumière infrarouge, le polariseur réflecteur étant disposé entre le panneau à cristaux liquides et la couche émissive.

13. Système LCD selon l'une quelconque des revendications 1 à 12, dans lequel les émetteurs de lumière visible, les émetteurs de lumière infrarouge et les détecteurs s'étendent à travers la couche d'affichage dans des réseaux bidimensionnels répliqués respectifs.

14. Système LCD selon l'une quelconque des revendications 1 à 13, dans lequel les émetteurs de lumière infrarouge émettent un rayonnement semi-lambertien.

15. Procédé permettant la localisation d'une position d'un objet lorsqu'il est placé à proximité d'un système d'affichage, le procédé comprenant :
la fourniture du système LCD selon l'une quelconque des revendications 1 à 14 ;
l'émission de la lumière infrarouge par la pluralité d'émetteurs de lumière infrarouge ;
la réflexion de la lumière infrarouge par une surface interne de la couche d'affichage à des endroits où le système LCD est touché ;
la détection, à l'aide de la pluralité de détecteurs, de la présence de la lumière infrarouge réfléchie transmise à travers le film optique multicouche ; et
la réalisation d'une détection de bord sur la lumière infrarouge transmise pour déterminer une zone le long de laquelle le système LCD a été touché.
